# EUROPEAN PATENT SPECIFICATION

(11) **EP 3 747 681 B1**
(45) Date of publication and mention of the grant of the patent: **25.08.2021**
(21) Application number: 20170960.7
(22) Date of filing: 23.04.2020
(51) Int. Cl.: B60K 7/00, B60R 16/02, B60K 1/04

(54) **IN-WHEEL MOTOR UNIT AND ELECTRIC VEHICLE**
RADINTERNE MOTOREINHEIT UND ELEKTROFAHRZEUG
UNITÉ DE MOTEUR-ROUE ET VÉHICULE ÉLECTRIQUE

(30) Priority: 30.05.2019 JP 2019101207
(43) Date of publication of application: 09.12.2020
(73) Proprietor: Yamaha Hatsudoki Kabushiki Kaisha, Iwata-shi, Shizuoka 438-8501 (JP)
(72) Inventor: KAMO, Shinichi, Iwata-shi, Shizuoka 438-8501 (JP); TERADA, Junji, Iwata-shi, Shizuoka 438-8501 (JP); FUJISHIRO, Masaya, Iwata-shi, Shizuoka 438-8501 (JP); OHNUKI, Tomokazu, Iwata-shi, Shizuoka-ken 438-0026 (JP)
(74) Representative: Grünecker Patent- und Rechtsanwälte PartG mbB

(56) References cited:
- JP-A- 2012 206 710
- US-A1- 2017 110 933
- US-A1- 2017 113 634

## Description

The present invention relates to an in-wheel motor unit and an electric vehicle.

An electric motorcycle using a direct-drive wheel motor is known (JP UM 7-046620 B). An in-wheel motor unit is also known (JP 2014-213622 A). A power unit for controlling driving of a rotating electric machine can be provided inside a rear arm supporting a rear wheel so as to rotate freely (Japanese Patent No. 4188641). The inside of the rear arm can be hollow by forming the rear arm by a main body and a cover (JP 2008-100609 A and Japanese Patent No. 5352573) Further in-wheel motor units are known from US 2017/110933 A1, JP 2012-206710 A and US 2017/113634 A1.

In an in-wheel motor type electric vehicle, an axle is fixed to a body of a rear arm. It is necessary to remove a cover from the body at the time of removing the axle, and it takes time to remove a large number of screws. Moreover, safety measures are necessary when a high-voltage wiring line passes the inside of the rear arm.

It is an object of the present invention to provide an in-wheel motor unit and an electric vehicle wherein an axle of said in-wheel motor unit can be attached/detached easily and safely.

According to the present invention said object is solved by an in-wheel motor unit having the features of independent claim 1. Moreover, said object is also solved by an electric vehicle according to claim 15. Preferred embodiments are laid down in the dependent claims.
(1) An in-wheel motor unit according to the present teaching includes an in-wheel motor having an axle, a stator fixed to the axle and a motor housing supported by the axle so as to be rotatable, an arm body having a first face to which one end part of the axle is fixed and a second face facing a region opposite to the first face, fasteners in which at least part thereof is exposed in the second face, fixing the arm body and the axle so as to be detachable, an arm cover including a main cover having a cover opening at a position facing the fasteners and a sub-cover attached to the main cover so as to block the cover opening, which is fastened to the arm body so as to cover the second face and to form an arm internal space, a motor cable including a first end connected to the in-wheel motor and a second end positioned in the arm internal space, at least part of which between the first end and the second end passes the inside of the axle, a power cable including a third end positioned in the outside of the arm internal space and a forth end positioned in the inside of the arm internal space and a terminal board arranged inside the arm internal space, including a first terminal to which the motor cable is connected so as to be detachable at a position facing the cover opening and a second terminal to which the power cable is connected.
   According to the present teaching, the arm body and the axle can be attached/detached, and the first terminal and the motor cable can be attached/detached by removing the sub-cover without removing the entire arm cover. Accordingly, the axle can be attached/detached easily and safely.
(2) In the in-wheel motor unit according to (1), the arm body may have an arm opening for arranging the motor cable on the second face, the axle may have an axle opening for arranging the motor cable on the second face at the end part fixed to the first face, and the arm opening and the axle opening may communicate with each other.
(3) In the in-wheel motor unit according to (2), the fasteners may include a plurality of screws arranged around the arm opening and the axle opening.
(4) In the in-wheel motor unit according to (3), the arm body may have a plurality of through holes through which the plural screws respectively pass around the arm opening.
(5) In the in-wheel motor unit according to any one of (1) to (4), the first face of the arm body may have an outside concave part that is concave toward the second face, and the axle may be inserted into the outside concave part.
(6) In the in-wheel motor unit according to any one of (1) to (5), the motor cable may include a plurality of first electric wires, and the first terminal may include a plurality of first terminals to which the plural first electric wires are respectively connected so as to be detachable.
(7) In the in-wheel motor unit according to any one of (1) to (6), the power cable may include a plurality of second electric wires, and the second terminal may include a plurality of second terminals to which the plural second electric wires are respectively connected so as to be detachable.
(8) The in-wheel motor unit according to any one of (1) to (7) may further include a first gasket for securing liquid tightness between the arm body and the arm cover, and a second gasket for securing liquid tightness between the main cover and the sub-cover.
(9) In the in-wheel motor unit according to (8), the sub-cover may have a convex part entering the inside of the cover opening.
(10) In the in-wheel motor unit according to (9), the convex part may have a shape extending in a belt shape along the cover opening.
(11) In the in-wheel motor unit according to (9) or (10), the main cover may have an inner peripheral surface of the cover opening, and the second gasket may be interposed between the inner peripheral surface and the convex part.
(12) In the in-wheel motor unit according to any one of (1) to (11), the main cover may have a peripheral edge part surrounding the cover opening on a surface facing the opposite of the second face and the sub-cover may have a flange expanding from the convex part so as to overlap with the peripheral edge part.
(13) In the in-wheel motor unit according to (12), the flange may contact the main cover at a peripheral edge and may not contact the main cover at a portion adjacent to the convex part.
(14) In the in-wheel motor unit according to any one of (1) to (13), the arm cover may have a cover outer surface, the cover outer surface may include a main outer surface as an outer surface of the main cover and a sub-outer surface as an outer surface of the sub-cover, and the main outer surface may have a larger number of concavities and convexities than the sub-outer surface.
(15) The in-wheel motor unit according to any one of (1) to (14) may further include a plurality of first screws fixing the main cover to the arm body and a plurality of second screws fixing the sub-cover to the main cover, the number of which may be smaller than the number of the plural first screws.
(16) In the in-wheel motor unit according to any one of (1) to (15), the second terminals may be covered with the main cover so as to avoid facing the sub-cover.
(17) An electric vehicle according to the present teaching includes the in-wheel motor unit according to any one of (1) to (16), a vehicle body frame to which the in-wheel motor unit is attached, a battery connected to the power cable and fixed to the vehicle body frame, a seat fixed to the vehicle body frame, and a handle fixed to the vehicle body frame.

### BRIEF DESCRIPTION OF THE DRAWINGS

Fig. 1 is a side view of an electric vehicle according to an embodiment;
Fig. 2 is a perspective view of an in-wheel motor unit;
Fig. 3 is a cross-sectional view taken along III-III line of the in-wheel motor unit shown in Fig. 2;
Fig. 4 is an exploded perspective view of a hub and a wheel;
Fig. 5 is a view showing a second face of an arm body;
Fig. 6 is an exploded perspective view of the arm body and the wheel;
Fig. 7 is an exploded perspective view of an arm cover; and
Fig. 8 is a perspective view showing the in-wheel motor unit from which a sub-cover is removed.

### DETAILED DESCRIPTION

Hereinafter, an embodiment of the present teaching will be explained with reference to the drawings.

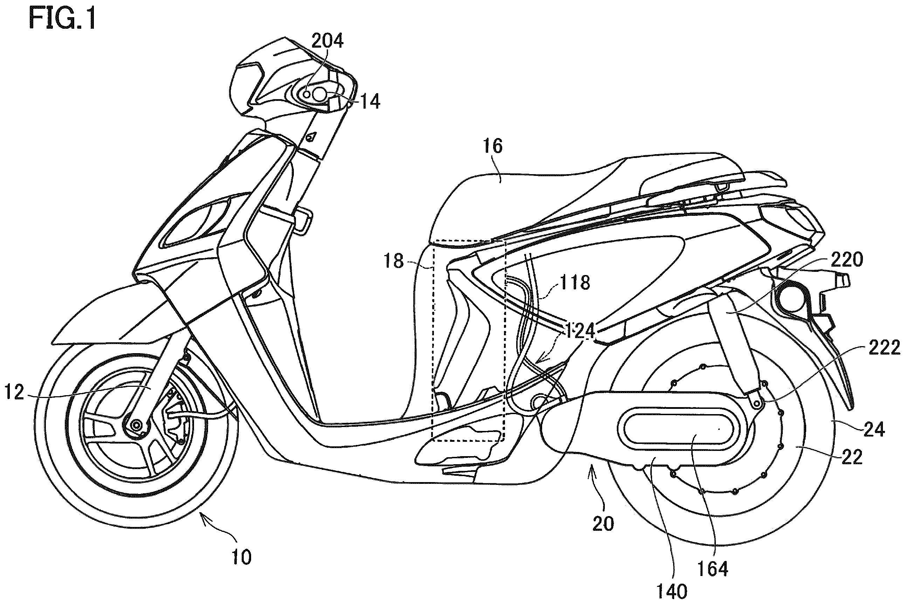

Fig. 1 is a side view of an electric vehicle according to an embodiment. A saddle-type electric vehicle will be explained as an example of the electric vehicle. The saddle-type electric vehicle may be an electric motorcycle, an electric three-wheeled vehicle, an electric four-wheeled vehicle or the like.

The electric vehicle includes a front wheel 10, a front fork 12 supporting the front wheel 10 and a handle 14 (for example, a handlebar) connecting to an upper part of the front fork 12. Grips are provided at a right end and a left end of the handle 14. For example, a right-side grip (not shown) is an acceleration grip for controlling speed.

A seat 16 is arranged behind the handle 14. A battery 18 is attached under the seat 16. The electric vehicle is a so-called scooter type vehicle, in which a space for putting rider's legs and a footboard for putting legs thereon are provided between the seat 16 and the front fork 12. The electric vehicle is not necessarily the scooter type vehicle. That is, the electric vehicle may be a vehicle on which the rider can ride in such a manner that the rider holds a vehicle body by legs.

The electric vehicle includes an in-wheel motor unit 20. The in-wheel motor unit 20 has a wheel 22. A tire 24 is attached to the wheel 22 to thereby form a rear wheel. The in-wheel motor unit 20 drives the rear wheel to rotate.

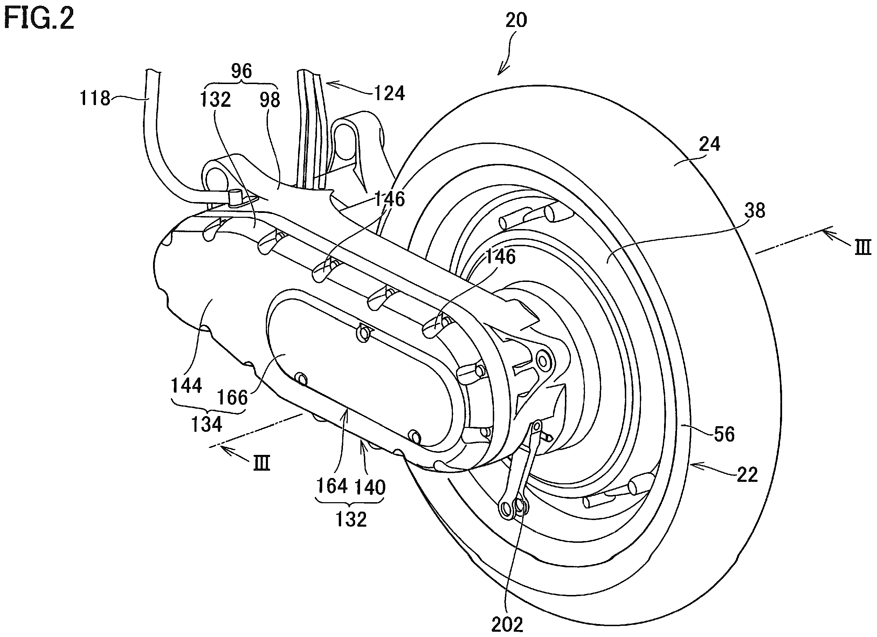

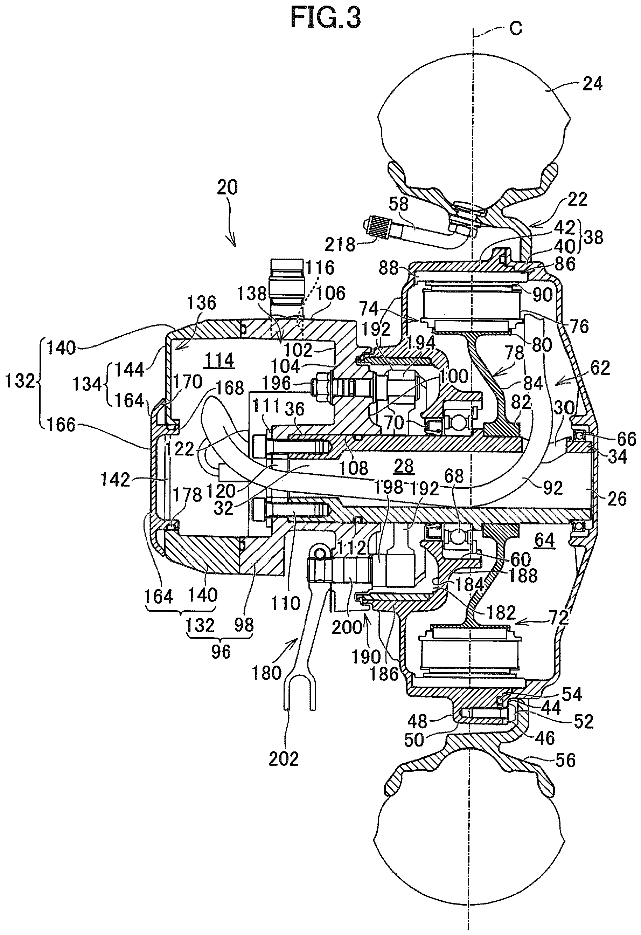

Fig. 2 is a perspective view of the in-wheel motor unit 20. Fig. 3 is a cross-sectional view of the in-wheel motor unit 20 shown in Fig. 2 taken along III-III line.

### [Axle]

The in-wheel motor unit 20 has an axle 26 as shown in Fig. 3. The axle 26 is a hollow and has an axle internal space 28 thereinside. The axle internal space 28 extends in an axial direction of the axle 26. The axle internal space 28 has a first axle opening 30 and a second axle opening 32. The axle 26 has the first axle opening 30 on a peripheral surface and the second axle opening 32 on a tip end surface.

The axle 26 has a first end part 34 closer to the first axle opening 30 than the second axle opening 32. The axle 26 has a second end part 36 closer to the second axle opening 32 than the first axle opening 30. The axle 26 is one member consecutive from the first end part 34 to the second end part 36.

### [Motor Housing]

The in-wheel motor unit 20 includes a motor housing 38. The motor housing 38 includes a left housing member 40 and a right housing member 42 combined in a direction along a central axis of rotation (hereinafter referred to also as a left and right direction). The left housing member 40 and the right housing member 42 are integrally formed by metal, respectively. As shown in Fig. 3, an inner surface of the left housing member 40 and an inner surface of the right housing member 42 face each other, and an outer surface of the left housing member 40 and an outer surface of the right housing member 42 face opposite directions. The left housing member 40 has a lid shape in which the inner surface facing the right housing member 42 is concave and the outer face on the opposite is convex. The right housing member 42 has a container shape covered by the left housing member 40.

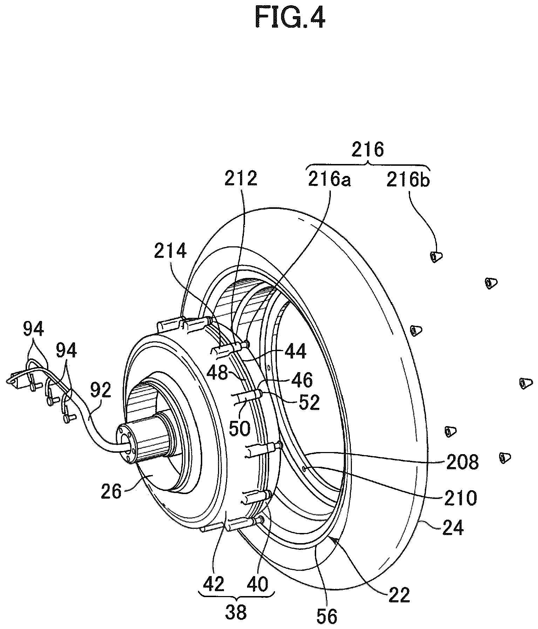

Fig. 4 is an exploded perspective view of the motor housing 38 and the wheel 22. The left housing member 40 has a first outside flange 44 protruding in a radial direction from an outer peripheral surface. The left housing member 40 has plural first attachment parts 46. The first attachment parts 46 further protrude in the radial direction from the first outside flange 44. The plural first attachment parts 46 are aligned at intervals along a rotation direction at an end part in one of left and right directions (for example, the left direction) of the left housing member 40.

The right housing member 42 has a second outside flange 48 protruding in the radial direction from an outer peripheral surface. The right housing member 42 has plural second attachment parts 50. The second attachment parts 50 further protrude in the radial direction from the second outside flange 48. The plural second attachment parts 50 are aligned at intervals along the rotation direction at an end part in one of left and right directions (for example, the right direction) of the right housing member 42.

The first outside flange 44 and the second outside flange 48 face each other. The left housing member 40 and the right housing member 42 are fixed to each other by the first attachment parts 46 and the second attachment parts 50. The first outside flange 44 and the second outside flange 48 are fixed to each other. A plurality of motor housing fixing tools 52 (for example, tap bolts shown in Fig. 3) are used for fixing. Each first attachment part 46 of the left housing member 40 has an insertion hole and each second attachment part 50 of the right housing member 42 has a screw hole. The tap bolt is inserted to the insertion hole from one of left and right directions (for example, the right direction) and screwed into the screw hole.

As shown in Fig. 3, a gasket 54 is arranged between the first outside flange 44 and the second outside flange 48. The gasket 54 may be made of metal or resin, as well as may be a liquid gasket. As the first outside flange 44 and the second outside flange 48 protrude in the radial direction from the outer peripheral surfaces of the left housing member 40 and the right housing member 42 respectively, the gasket 54 can be easily arranged.

The right housing member 42 is larger than the left housing member 40 in a width of the left and right direction. Therefore, positions of the second outside flange 48 and the first outside flange 44 are shifted to a right direction with respect to the center in the left and right direction of the motor housing 38 (a center C in the left and right direction of the wheel 22). Accordingly, it is easy to suppress interference of an air valve 58 formed in a rim 56 of the wheel 22 with respect to the second outside flange 48 and the first outside flange 44 as shown in Fig. 3.

### [Shaft Hole/Motor Housing Concave Surface]

As shown in Fig. 3, the motor housing 38 (the right housing member 42) has a shaft hole 60 through which the axle 26 passes. The shaft hole 60 is formed at a central part of the right housing member 42, and the axle 26 passes through inside the shaft hole 60. The second end part 36 of the axle 26 is positioned on an outer side of the motor housing 38. The motor housing 38 has a motor housing concave surface 62 facing the axle 26. The motor housing concave surface 62 is formed by the inner surface of the left housing member 40 and the inner surface of the right housing member 42. The first end part 34 of the axle 26 is positioned on an inner side of a motor internal space 64 surrounded by the motor housing concave surface 62 and the axle 26. The first axle opening 30 faces the motor housing concave surface 62 (the motor inner space 64). The second end part 36 of the axle 26 is positioned on an outer side of the motor internal space 64.

### [Rotation of Motor Housing]

The motor housing 38 is supported by the axle 26 so as to be rotatable as shown in Fig. 3. A first bearing 66 and a second bearing 68 are interposed between the motor housing 38 and the axle 26 at an interval in a longitudinal direction of the axle 26. The motor housing 38 is supported by the axle 26 so as to be rotatable by the first bearing 66 and the second bearing 68. The first axle opening 30 is positioned between the first bearing 66 and the second bearing 68.

The first bearing 66 is positioned at (is fitted to) the first end part 34 of the axle 26. The axle 26 is supported by the left housing member 40 so as to be rotatable through the first bearing 66. A concave part is formed at the center of the inner surface of the left housing member 40, and the first bearing 66 is positioned on an inner side of the concave part. The first bearing 66 (for example, the entire thereof) is positioned in a right direction with respect to the center C.

The second bearing 68 is arranged between an inner peripheral surface of the shaft hole 60 of the right housing member 42 and the axle 26. The second bearing 68 (for example, the entire thereof) is positioned in a left direction with respect to the center C of the wheel 22. A distance from the second bearing 68 to the center C of the wheel 22 is smaller than a distance from the first bearing 66 to the center C of the wheel 22. Accordingly, a larger load is acted on the second bearing 68 than the first bearing 66. Therefore, a width of the second bearing 68 in the left and right direction is made to be larger than a width of the first bearing 66 in the left and right direction. The second bearing 68 has a higher dynamic load capacity than the first bearing 66.

### [Liquid Tightness in Motor Housing and Axle]

As shown in Fig. 3, the in-wheel motor unit 20 has a first seal 70 for securing liquid tightness between the motor housing 38 and the axle 26. The first seal 70 includes a packing (for example, an oil seal) rotatable between the shaft hole 60 of the motor housing 38 and the axle 60. The first seal 70 may be either metal or resin. The first seal 70 is closer to the second end part 36 than the second bearing 68. The first seal 70 is arranged between the inner peripheral surface of the shaft hole 60 of the right housing member 42 and an outer peripheral surface of the axle 26. The first seal 70 is press-fitted and fixed to the inner peripheral surface of the shaft hold 60 so as to rotate with the motor housing 38.

The first end part 34 of the axle 26 does not pierce through the left housing member 40. The first end part 34 is positioned on an inner side of the motor housing 38, and the left housing member 40 covers the first end part 34. As the seal is not necessary for the left housing member 40, the number of necessary seals can be reduced and a frictional resistance with respect to rotation of the motor housing 38 can be reduced.

### [In-Wheel Motor]

As shown in Fig. 3, the in-wheel motor unit 20 includes an in-wheel motor 72. The in-wheel motor 72 is, for example, a three-phase AC motor. The left housing member 40 covers one of left and right directions (for example, the right direction) of the in-wheel motor 72. The right housing member 42 covers one of left and right directions (for example, the left direction) of the in-wheel motor 72.

### [Stator]

As shown in Fig. 3, the in-wheel motor 72 includes a stator 74 fixed to the axle 26. The stator 74 is housed in the motor housing 38. The stator 74 has plural iron cores 76 around the axle 26 and coils (not shown) wound around the iron cores 76. The center of the stator 74 in the left and right direction corresponds to the center C of the wheel 22. As a modification example, the center of the stator 74 in the left and right direction may be positioned in the right direction and may be positioned in the left direction with respect to the center C of the wheel 22.

The stator 74 is supported by a stator frame 78. The stator frame 78 has an annular stator attachment part 80 surrounding the axle 26 at an outer peripheral part thereof. The stator 74 is fixed to an outer peripheral surface of the stator attachment part 80. The plural iron cores 76 are attached (for example, welded) to the outer peripheral surface of the stator attachment part 80.

The stator frame 78 has a fixing part 82 with respect to the axle 26 (the outer peripheral surface thereof). The fixing part 82 is annular, and the axle 26 is inserted thereinto. The fixing part 82 is fixed to the axle 26 so as not to relatively rotate with respect to the axle 26. The fixing part 82 is, for example, welded to the outer peripheral surface of the axle 26. The regulation of relative rotation between the fixing part 82 and the axle 26 may be realized not by welding but also by a spline formed on an inner peripheral surface of the fixing part 82 and the outer peripheral surface of the axle 26 or a key engaging with the inner peripheral surface of the fixing part 82 and the outer peripheral surface of the axle 26.

The stator 74 is positioned in the left direction with respect to the fixing part 82. However, the entire fixing part 82 overlaps with the stator 74 in the radial direction of the wheel 22. The sixing part 82 is shifted in the right direction with respect to the center C of the wheel 22 in the left and right direction. The center of the fixing part 82 in the left and right direction is positioned in the right direction with respect to the center C of the wheel 22. The entire fixing part 82 is positioned in the right direction with respect to the center C and does not cross a plane passing the center C (plane orthogonal to the axle 26). As a modification example, the fixing part 82 may cross the plane passing the center C (plane orthogonal to the axle 26).

The stator frame 78 has a connection part 84 extending from the fixing part 82 toward the stator attachment part 80 in the radial direction and connecting therebetween. The connection part 84 has, for example, a disc shape. The fixing part 82 is formed at a central part of the disc-shaped connection part 84. The stator attachment part 80 is formed at an outer peripheral edge of the disc-shaped connection part 84. The connection part 84 is not necessarily the disc-shape as far as it has a shape connecting the fixing part 82 and the stator attachment part 80. The connection part 84 is inclined with respect to the radial direction of the axle 26, shifting the position of the stator 74 in the left direction with respect to the fixing part 82. As a modification example, the connection part 84 of the stator frame 78 may be parallel to the radial direction of the axle 26.

The first bearing 66 is positioned in the right direction with respect to the fixing part 82. The second bearing 68 is positioned in the left direction with respect to the fixing part 82. The second bearing 68 is at a place overlapping with the stator 74 in the radial direction of the axle 26.

### [Rotor]

As shown in Fig. 3, a deceleration mechanism does not exist in a power transmission path between the motor housing 38 and the wheel 22. The motor housing 38 integrally rotates with the wheel 22. A rotation speed of the motor housing 38 is the same as a rotation speed of the wheel 22. The electric vehicle is a direct-drive vehicle.

The motor housing 38 includes a rotor 86 fixed to the motor housing concave surface 62. The rotor 86 is housed in the motor housing 38. The rotor 86 can rotate around the axle 26. The rotor 86 is positioned on an outer side with respect to the stator 74 in the radial direction. The rotor 86 and the stator 74 face each other in the radial direction. The rotor 86 is fixed to an inner side of one of the left housing member 40 and the right housing member 42 (for example, the right housing member 42).

The rotor 86 includes a magnet holder 88 fixed to the inner side of the right housing member 42. The magnet holder 88 is welded to the inner side of the right housing member 42. The magnet holder 88 has an annular shape surrounding the axle 26. As the right housing member 42 is larger than the left housing member 40 in the width of the left and right direction, the rotor 86 is fixed to the inner side of the right housing member 42 having the larger width. Accordingly, it becomes easy to secure mounting strength of the rotor 86. As a modification example, the width of the right housing member 42 may be the same as the width of the left housing member 40, and the width of the left housing member 40 may be larger than the width of the right housing member 42. The rotor 86 may be mounted to the left housing member 40 having a smaller width.

The rotor 86 has a plurality of permanent magnets 90 aligned in a circumferential direction of the axle 26. The plural permanent magnets 90 are fixed to an inner peripheral surface of the magnet holder 88. As a modification example, the permanent magnets 90 may be directly fixed to the inner side of the right housing member 42. As the permanent magnets 90 are fixed to the inner side of the motor housing concave surface 62, the permanent magnets 90 rotate as part of the motor housing 38.

### [Motor Cable]

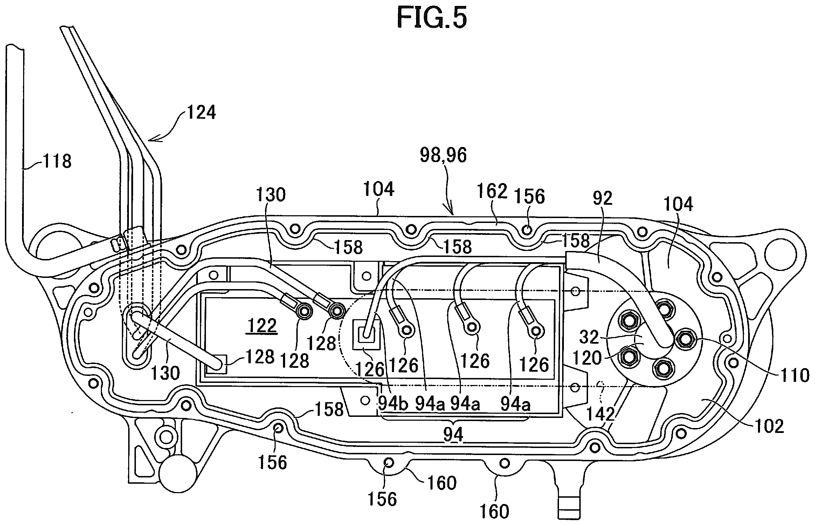

The in-wheel motor 72 includes a motor cable 92 connected to the stator 74 (the in-wheel motor 72) as shown in Fig. 3. The motor cable 92 includes a plurality of first electric wires 94 (Fig. 5) connecting to not-shown coils. In the case where the in-wheel motor 72 is the three-phase AC motor, the motor cable 92 includes three first electric wires 94a for allowing three-phase AC current to flow (see Fig. 5). The motor cable 92 may include another at least one first electric wire 94b for an application of connecting to a sensor (not shown) for detecting a rotation position of the motor housing 38. The motor cable 92 is drawn out from the inner side of the motor housing 38 to an outside thereof.

### [Arm/Arm Body]

As shown in Fig. 2, the in-wheel motor unit 20 has an arm 96. The arm 96 includes an arm body 98 as shown in Fig. 3. The arm body 98 has a first face 100 and a second face 102 which are opposite to each other. The arm body 98 has a box shape opening to one of left and right directions (for example, the left direction). The arm body 98 includes a side wall 104 arranged along the motor housing 38 and a peripheral wall 106 standing from the side wall 104 on the second face 102.

### [Fixing of Arm Body and Axle]

As shown in Fig. 2, the arm body 98 is positioned at one of left and right directions (for example, the left direction) extending along the central axis of rotation of the wheel 22. The wheel 22 is supported so as to be vertically movable by the arm body 98. The arm body 98 is connected to a vehicle body frame (not shown) through a not-shown pivot shaft, which can vertically move about the pivot shaft.

As shown in Fig. 3, the arm body 98 supports the axle 26. The arm body 98 is arranged only at one of left and right directions with respect to the wheel 22, supporting only one of the first end part 34 and the second end part 36 of the axle 26. Specifically, the second end part 36 of the axle 26 is supported by the arm body 98, and the first end part 34 is not supported by the arm body 98. The axle 26 is in a cantilever state. As a modification example, it is also preferable that the arm body 98 supports the first end part 34 of the axle 26 and does not support the second end part 36. In this case, the fixing part 82 of the stator frame 78 may be shifted in the left direction with respect to the center C of the wheel 22.

According to the structure in which only the second end part 36 of the axle 26 is supported by the arm body 98, it becomes easy to access the wheel 22, a brake device and the tire 24 at the time of, for example, maintenance work or repair work of the electric vehicle, which improves workability. It is also possible to reduce the number of seals necessary for the motor housing 38.

The axle 26 is fixed to an outer surface of the arm 96. The second end part 36 of the axle 26 is fixed to the first face 100 of the arm body 98. The first face 100 of the arm body 98 has an outside concave part 108 that is concave toward the second face 102. The axle 26 is inserted into the outside concave part 108 of the arm 96 (the arm body 98). The axle 26 (the second end part 36) is inserted into the outside concave part 108 and is not capable of relatively rotate with respect to the arm body 98. The outside concave part 108 of the arm body 98 is positioned on one side of left and right directions with respect to the in-wheel motor 72. The axle 26 does not pierce through the arm body 98. As a modification example, the second end part 36 of the axle 26 may pierce through the arm body 98.

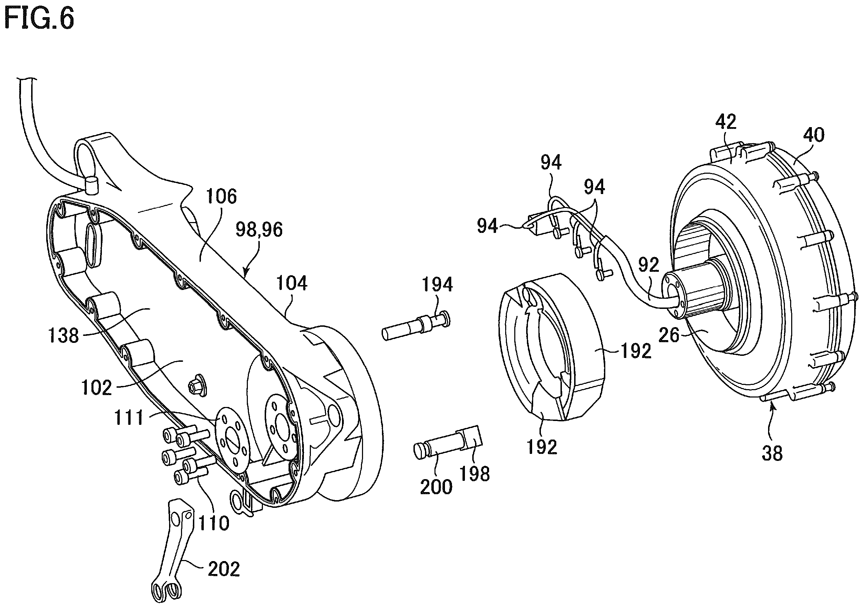

Fig. 5 is a view showing the second face 102 of the arm body 98. Fig. 6 is an exploded perspective view of the arm body 98 and the wheel 22.

The arm 96 (the arm body 98) and the axle 26 are fixed so as to be detachable by fasteners 110. The fasteners 110 include a plurality of screws. The plurality of screws are arranged around a second arm opening 120 and the second axle opening 32 as shown in Fig. 3. At least part of the fasteners 110 is exposed to an arm internal space 114. The fasteners 110 are arranged so as to be capable of performing fastening work from the second face 102 side.

In a case where the fasteners 110 are screw bolts, head parts are arranged on the second face 102 and screw tips are inserted from the second face 102. Female screws are formed in the axle 26. The fastening work of the fasteners 110 is performed by using polygonal holes at the head parts. As a modification example, polygonal outer shape of the head parts may be used for fastening work. As another modification example, a stud bolt is attached to the axle 26 and a nut is fastened on the second face 102. Note that a washer 111 is interposed between the fasteners 110 and the second face 102.

The fasteners 110 pierce through the arm body 98. The arm 96 (the arm body 98) has a plurality of through holes through which the fasteners 110 (plural screws) pass as shown in Fig. 3. The plural through holes exist around the second arm opening 120.

### [Liquid Tightness in Arm Body and Axle]

The in-wheel motor unit 20 includes a second seal 112 for securing liquid tightness between the arm 96 and the axle 96. The second seal 112 is arranged between an inner peripheral surface of the outside concave part 108 and the outer peripheral surface of the axle 26. The second seal 112 is, for example, an O-ring.

### [Arm Internal Space]

As shown in Fig. 3, the arm 96 is hollow and has the arm internal space 114 thereinside. The arm internal space 114 has a breather mechanism (a first arm opening 116) (Fig. 5). The first arm opening 116 is formed on the peripheral wall 106. The first arm opening 116 communicates with outside air. The first arm opening 116 faces upward. Due to the first arm opening 116, it is possible to suppress change in an air pressure inside the arm internal space 114 caused by temperature change. A breather hose 118 is connected to the first arm opening 116. The breather hose 118 is drawn out upward from the arm 96, which makes water difficult to enter. A waterproof structure may be provided in the first arm opening 116. For example, a filter or a valve formed by a material (fibers) having waterproof properties and breathability may be installed.

The arm internal space 114 has the second arm opening 120. The motor cable 92 is drawn to the second face 102 from the second arm opening 120 (Fig. 5). The motor cable 92 is drawn out from the second axle opening 32 of the axle 26. That is, the second axle opening 32 and the second arm opening 120 communicate with each other.

According to the embodiment, the inside (the motor internal space 64) of the motor housing 38 to which the in-wheel motor 72 is installed communicates with outdoor air at the first arm opening 116 through the axle internal space 28 and the arm internal space 114. Accordingly, the air pressure inside the motor housing 38 (the motor internal space 64) can be adjusted.

### [Terminal Board]

As shown in Fig. 5, a terminal board 122 is attached to the second face 102 of the arm body 98. The terminal board 122 is arranged in the arm internal space 114 shown in Fig. 3. The motor cable 92 and a power cable 124 are separately connected to the terminal board 122. The power cable 124 is connected to the battery 18 shown in Fig. 1. A not-shown inverter is mounted on the terminal board 122. DC current supplied from the battery 18 through the power cable 124 is converted into AC current by the inverter and supplied to the in-wheel motor 72. The terminal board 122 may be a circuit substrate.

As shown in Fig. 3, the motor cable 92 passes the axle internal space 28 from the first axle opening 30 and drawn out to the arm internal space 114 from the second axle opening 32 and the second arm opening 120. The motor cable 92 passes the inside of the axle 26, piercing through the arm body 98 and being drawn to the second face 102. The motor cable 92 is drawn to the second face 102 from the second axle opening 32.

As shown in Fig. 5, the terminal board 122 has a first terminal 126 to which the motor cable 92 is connected so as to be detachable. The motor cable 92 includes the plural first electric wires 94. The first terminal 126 includes plural first terminals 126 to which the plural first electric wires 94 are respectively connected so as to be detachable. The plural first terminals 126 (for example, all of them) are aligned in a longitudinal direction (left and right direction) of the axle 26. The first terminals 126 may include first terminal screws for fixing first crimp terminals fixed to the first electric wires 94 or may be first connectors.

The power cable 124 is drawn out to the outside of the arm 96 from the arm internal space 114. Or, the power cable 124 is drawn to the second face 102 from the outside of the arm body 98 and an arm cover 132. The terminal board 122 has a second terminal 128 to which the power cable 124 is connected. The power cable 124 includes a plurality of second electric wires 130. The second electric wires 130 include a pair of second electric wires 130 for allowing DC current to flow. The plural second electric wires 130 may include at least another one second electric wire 130 for controlling the in-wheel motor 72.

The second terminal 128 includes plural second terminals 128 to which the plural second electric wires 130 are respectively connected so as to be detachable. The second terminals 128 may include second terminal screws for fixing second crimp terminals fixed to the second electric wires 130 or may be second connectors.

### [Arm Cover]

As shown in Fig. 3, the arm 96 includes the arm cover 132 covering the arm body 98. The arm cover 132 has a cover outer surface 134. The arm internal space 114 is formed by the arm body 98 and the arm cover 132. The arm cover 132 reinforces the arm body 98. A material for the arm cover 132 may be either metal or resin. The arm cover 132 is arranged at one of left and right directions (for example, the left direction) of the arm body 98 to close the arm body 98. The arm body 98 and the arm cover 132 are united in the left and right direction. The arm cover 132 is attached to the arm body 98 so as to cover the fasteners 110 and the terminal board 122.

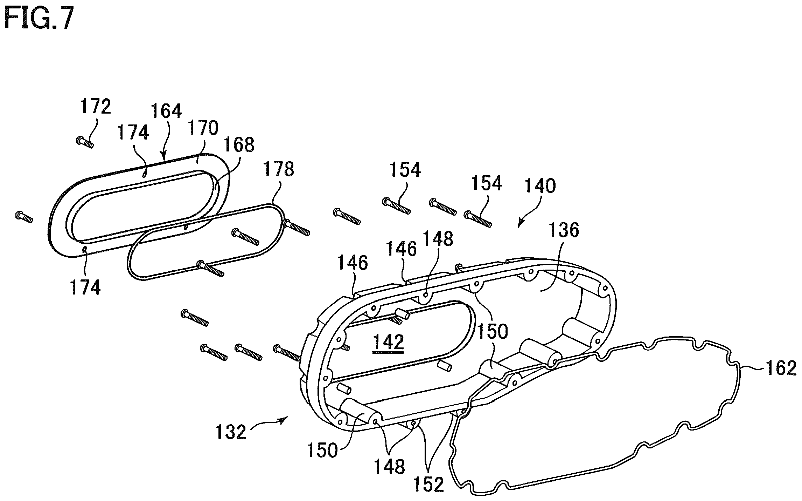

Fig. 7 is an exploded perspective view of the arm cover 132. The arm cover 132 has a cover concave part 136 facing the arm body 98. The arm body (Fig. 6) has a body concave part 138 facing the arm cover 132. The body concave part 138 and the cover concave part 136 face each other. The arm internal space 114 is a space between the arm body 98 and the arm cover 132.

### [Main Cover]

As shown in Fig. 7, the arm cover 132 includes a main cover 140. The main cover 140 includes a cover opening 142. The main cover 140 has an inner peripheral surface of the cover opening 142. The cover outer surface 134 (Fig. 3) of the arm cover 132 includes a main outer surface 144 as an outer surface of the main cover 140. A front surface of the main outer surface 144 faces an opposite direction to the second face 102, having an opening periphery surrounding the cover opening 142 (Fig. 3).

On the main outer surface 144, two or more main-outside concave parts 146 are formed (Fig. 7). The two or more main-outside concave parts 146 are arranged at a peripheral end part on the front surface of the main-outer surface 144 (Fig. 2). The main-outside concave parts 146 are concave in a direction parallel to the front surface from a peripheral surface surrounding the front surface of the main outer surface 144. The main-outside concave parts 146 are concave also in a direction perpendicular to the front surface from the front surface of the main outer surface 144, having first through holes 148 on bottom surfaces (Fig. 7). The first through holes 148 face the arm body 98. In order to obtain regions for forming the first through holes 148, main-inside convex parts 150 are formed on an inner surface of the main cover 140.

The main cover 140 includes at least one main-outside convex part 152. The main-outside convex part 152 protrudes to an outward direction parallel to the front surface of the main outer surface 144 from the peripheral surface of the main cover 140. The first through hole 148 is formed also in the main-outside convex part 152. The first through hole 148 extends along a direction facing the arm cover 132 and the arm body 98.

The main cover 140 is fixed to the arm body 98 by a plurality of first screws 154. In the arm body 98, a plurality of first screw holes 156 into which the plural first screws 154 are screwed are formed as shown in Fig. 5. The plural first screw holes 156 are arranged along a peripheral end of the second face 102. In order to obtain regions for forming the first screw holes 156, body-inside convex parts 158 are formed on an inner surface of the arm body 98. The body-inside convex parts 158 of the arm body 98 correspond to the main-inside convex parts 150 of the main cover 140. Moreover, in order to obtain regions for forming other first screw holes 156, body-outside convex parts 160 are formed on an outer surface of the arm body 98. The body-outside convex parts 160 of the arm body 98 correspond to the main-outside convex parts 152 of the main cover 140.

The liquid tightness between the arm body 98 and the arm cover 132 is secured by a first gasket 162 (Fig. 5 and Fig. 7). The first gasket 162 has a shape surrounding the arm internal space 114 without a break. The first gasket 162 is positioned on an inner side of the plural first screws 154. The first gasket 162 is compressed by a fastening force of the plural first screws 154 between the arm body 98 and the arm cover 132.

The first gasket 162 is configured to bend in a protruding direction of the main-inside convex parts 150 and the body-inside convex parts 158 (Fig. 5 and Fig. 7). In other words, the first gasket 162 is interposed between the main-inside convex parts 150 and the body-inside convex parts 158. On the other hand, the first gasket 162 does not bend and extends so as to draw a straight line at portions adjacent to the main-outside convex parts 152 and the body-outside convex parts 160.

The first gasket 162 may be either an O-ring or a liquid gasket. It is possible to suppress the entering of water into the arm internal space 114 due to the first gasket 162. That is, the inside of the arm internal space 114 is partitioned from the outside in the same manner as the inside of the motor housing 38.

### [Sub-Cover]

As shown in Fig. 7, the arm cover 132 includes a sub-cover 164. The sub-cover 164 is attached to the main cover 140 so as to block the cover opening 142. The cover outer surface 134 of the arm cover 132 includes a sub-outer surface 166 as an outer surface of the sub-cover 164 (Fig. 3). As shown in Fig. 2, the sub-outer surface 166 has a simpler surface shape than that of the main outer surface 144. The main outer surface 144 has a larger number of concavities and convexities than the sub-outer surface 166.

The sub-cover 164 has a belt-shaped convex part 168 entering the inside of the cover opening 142 as shown in Fig. 3. The belt-shaped convex part 168 protrudes toward the second face 102 on a back surface (a surface facing the second face 102) of the sub-cover 164. The belt-shaped convex part 168 extends in a belt shape along the cover opening 142 without a break (Fig. 7). The sub-cover 164 has a flange 170 expanding from the belt-shaped convex part 168 so as to overlap with an opening peripheral edge of the main cover 140. The flange 170 contacts the main cover 140 at a tip end thereof. The flange 170 does not contact the main cover 140 at a portion adjacent to the belt-shaped convex part 168.

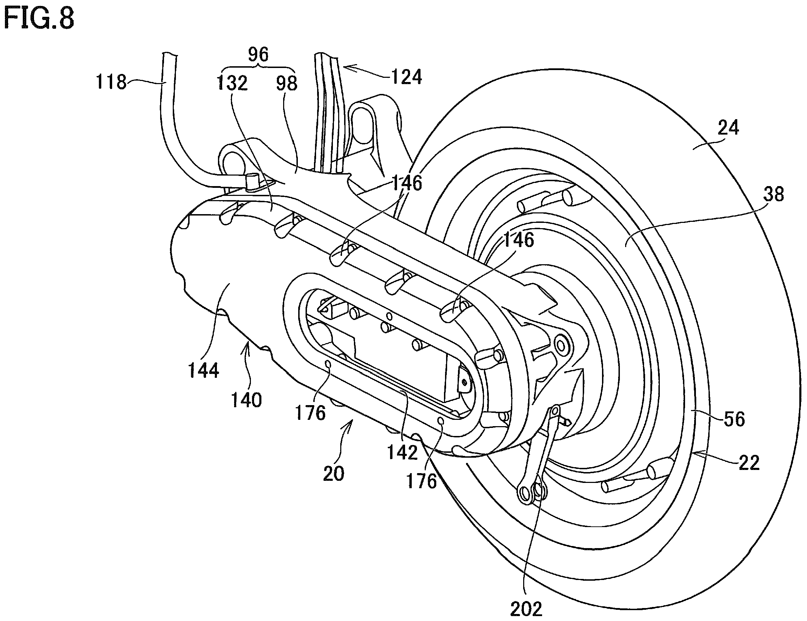

As shown in Fig. 7, the sub-cover 164 is fixed to the main cover 140 by a plurality of second screws 172. The sub-cover 164 has second through holes 174 through which the plural second screws 172 pass in the flange 170. The main cover 140 has a plurality of second screw holes 176 (Fig. 8) into which the plural second screws 172 are screwed at a periphery of the cover opening 142 on the main outer surface 144. The number of the plural second screws 172 is smaller than the number of the plural first screws 154.

The liquid tightness between the main cover 140 and the sub-cover 164 is secured by a second gasket 178. The second gasket 178 exists inside the all second screws 172. The second gasket 178 is also interposed between an inner peripheral surface of the cover opening 142 and the belt-shaped convex part 168. Therefore, a direction in which the main cover 140 and the sub-cover 164 sandwich the second gasket 178 is orthogonal to an attaching direction of the main cover 140 and the sub-cover 164. Accordingly, the second gasket 178 is not crushed due to a fastening force of the plural second screws 172. Therefore, deterioration in the second gasket 178 is low even when fastening and removal of the plural second screws 172 are repeated.

As shown in Fig. 5, the first terminals 126 exist at a position facing the sub-cover 164 or inside the cover opening 142. The fasteners 110 fixing the arm 96 (the arm body 98) and the axle 26 also exist at a position facing the sub-cover 164 or inside the cover opening 142. Therefore, the first terminals 126 and the fasteners 110 can be visually recognized through the cover opening 142 and can be accessed. On the other hand, the second terminals 128 are covered with the main cover 140 so as to avoid facing the sub-cover 164. That is, the second terminals 128 are positioned on the outer side of the cover opening 142.

Fig. 8 is a perspective view showing the in-wheel motor unit 20 from which the sub-cover 164 is removed. When the sub-cover 164 is removed, the fasteners 110 and the first terminals 126 are exposed (Fig. 5). Therefore, the arm body 98 and the axle 26 can be attached/detached, and the first terminals 126 and the motor cable 92 can be attached/detached by removing the sub cover 164 without removing the entire arm cover 132. Accordingly, the axle 26 can be attached/detached easily.

### [Brake Device]

As shown in Fig. 3, a brake device 180 for adding a braking force to the wheel 22 is arranged adjacent to the motor housing 38. The brake device 180 is arranged between the arm body 98 (the side wall 104) and the motor housing 38 (the right housing member 42). The brake device 180 is fixed to the arm 96. The brake device 180 is a drum brake device.

### [Brake Space]

The brake device 180 is arranged in a brake space 182 surrounded by the axle 26, the motor housing 38 and the arm 96. The right housing member 42 includes a housing concave part 184 for partitioning the brake space 182. The housing concave part 184 is concave toward the inner side of the motor housing 38.

The motor housing 38 (the right housing member 42) includes a cylindrical wall 186 having a cylindrical shape surrounding the axle 26 and an inside wall 188 extending toward the axle 26 from the cylindrical wall 186. The cylindrical wall 186 and the inside wall 188 configure the housing concave part 184. The shaft hole 60 into which the axle 26 is inserted is formed in the inside wall 188, and the first seal 70 and the second bearing 68 are provided in the inside wall 188.

### [Labyrinth Seal]

As shown in Fig. 3, a portion where the motor housing 38 (the right housing member 42) and the arm 96 (the side wall 104) face each other forms a labyrinth seal 190. Specifically, the right housing member 42 has a multistage convex part protruding toward the arm body 98 from the cylindrical wall 186. The multistage convex part has an annular shape surrounding the axle 26 in a side view. On the other hand, a multistage concave part is formed on the side wall 104 of the arm body 98. The multistage convex part enters the multistage concave part. As a gap between an inner surface of the multistage concave part and the multistage convex part is curved, the entering of water is reduced. That is, the labyrinth seal 190 is formed by the multistage convex part and the multistage concave part. Water entering the housing concave part 184 can be reduced by the labyrinth seal 190.

### [Brake Shoes/Cam]

The brake device 180 includes a pair of brake shoes 192 (Fig. 6). The brake shoes 192 are supported by a support shaft 194. The support shaft 194 is fixed to the side wall 104 of the arm body 98 (Fig. 3). The support shaft 194 is a male screw piercing through the side wall 104 and is fastened by a nut 196 arranged on the second face 102.

The brake device 180 includes a cam 198 expanding the brake shoes 192 to an outer side in the radial direction (Fig. 6). The cam 198 has a shaft part 200. The shaft part 200 is held by the side wall 104 of the arm body 98 (Fig. 3). A lever 202 is attached to a n end part of the shaft part 200. An operation member (for example, a brake lever 204 (Fig. 1) provided in the handle 14) that can be operated by the rider is connected to the lever 202 through a wire (not shown).

The brake shoes 192 and the cam 198 are arranged in the brake space 182. The brake shoes 192 are expanded toward the cylindrical wall 186 in the housing concave part 184 by an action of the cam 198. A cylindrical friction material 206 to which the brake shoes 192 are pushed is fixed to an inner peripheral surface of the cylindrical wall 186. As a modification example, the brake shoes 192 may directly contact the inner peripheral surface of the cylindrical wall 186.

### [Fixing of Wheel and Motor Housing]

As shown in Fig. 4, the wheel 22 has an inside flange 208. The inside flange 208 protrudes toward an inner side in the radial direction from the rim 56. The inside flange 208 has an annular shape. The inside flange 208 has a plurality of loose holes 210.

The left housing member 40 of the motor housing 38 has a plurality of third attachment parts 212. The plural third attachment parts 212 are aligned in the circumferential direction of the axle 26. The third attachment parts 212 protrude further in the radial direction from the first outside flange 44. The third attachment parts 212 have not-shown through holes.

The right housing member 42 of the motor housing 38 has a plurality of fourth attachment parts 214. The plural fourth attachment parts 214 are aligned in the circumferential direction of the axle 26. The fourth attachment parts 214 protrude further in the radial direction from the second outside flange 48. The fourth attachment parts 214 have not-shown screw holes.

The wheel 22 is fixed to an outer side in the radial direction with respect to the motor housing 38. The motor housing 38 is positioned on an inner side of the inside flange 208 of the wheel 22. The wheel 22 (the inside flange 208) is positioned at one of left and right directions (for example, the right direction) of the motor housing 38.

The wheel 22 and the motor housing 38 are fixed by wheel fixing tools 216 (for example, stud bolts 216a and nuts 216b). The stud bolts 216a are fixed to the motor housing 38. The stud bolts 216a are screwed into screw holes (not shown) of the right housing member 42 via through holes (not shown) of the left housing member 40 and fixed to the motor housing 38. The wheel fixing tools 216 are different from the motor housing fixing tools 52 for fixing the left housing member 40 and the right housing member 42 to each other.

The stud bolts 216a (part of the wheel fixing tools 216) fixed to the motor housing 38 are inserted into the loose holes 210 of the wheel 22 and fastened by the nuts 216b (another part of the wheel fixing tools 216). The wheel 22 is thus attached to the motor housing 38.

When the nuts 216b are removed from the stud bolts 216a, the wheel 22 can be removed from the motor housing 38 while the right housing member 42 is united with the left housing member 40. Accordingly, workability such as maintenance of the tire 24 can be improved. Fastening and removal works of the nuts can be performed on a side where the arm body 98 does not exist (one side of left and right directions (for example, the right direction) with respect to the wheel 22).

### [Air Valve]

As shown in Fig. 3, the wheel 22 has the air valve 58 for pumping air into the tire 24. The air valve 58 is connected to an inner side of the rim 56. A connecting part between the air valve 58 and the rim 56 is shifted to one of left and right directions (for example, the left direction) from the center (the center C in the left and right direction of the wheel 22) in the left and right direction of the motor housing 38. The air valve 58 diagonally extends toward a rotating central axis of the rim 56 from the connecting part with respect to the rim 56, bending and diagonally extending to a side direction of the rim 56. Accordingly, a cap 218 at a tip end of the air valve 58 can be separated from the motor housing 38. Moreover, it is possible to prevent an external force from acting on the air valve 58 due to the motor housing 38 and the arm 96 existing on the side to which the air valve 58 extends.

### [Suspension]

As shown in Fig. 1, the electric vehicle 1 includes a rear suspension 220. The arm body 98 has a suspension mounting part 222 to which a lower end of the rear suspension 220 is connected. The suspension mounting part 222 is formed on the peripheral wall 106 of the arm body 98.

## Claims

1. An in-wheel motor unit (20) comprising:
an in-wheel motor (72) having an axle (26), a stator (74) fixed to the axle (26) and a motor housing (38) supported by the axle (26) so as to be rotatable;
an arm body (98) having a first face (100) to which one end part of the axle (26) is fixed and a second face (102) facing a region opposite to the first face (100);
fasteners (110) in which at least part thereof is exposed in the second face (102), fixing the arm body (98) and the axle (26) so as to be detachable;
an arm cover (132) including a main cover (140) having a cover opening (142) at a position facing the fasteners (110) and a sub-cover (164) attached to the main cover (140) so as to block the cover opening (142), which is fastened to the arm body (98) so as to cover the second face (102) and to form an arm internal space (114);
a motor cable (92) including a first end connected to the in-wheel motor (72) and a second end positioned in the arm internal space (114), at least part of which between the first end and the second end passes the inside of the axle (26);
a power cable (124) including a third end positioned in the outside of the arm internal space (114) and a forth end positioned in the inside of the arm internal space (114); and
a terminal board (122) arranged inside the arm internal space (114), including a first terminal (126) to which the motor cable (92) is connected so as to be detachable at a position facing the cover opening (142) and a second terminal (128) to which the power cable (124) is connected.

2. The in-wheel motor unit (20) according to claim 1, wherein the arm body (98) has an arm opening (120) for arranging the motor cable (92) on the second face (102),
the axle (26) has an axle opening (32) for arranging the motor cable (92) on the second face (102) at the end part fixed to the first face (100), and
the arm opening (120) and the axle opening (32) communicate with each other.

3. The in-wheel motor unit (20) according to claim 2, wherein the fasteners (110) include a plurality of screws arranged around the arm opening (120) and the axle opening (32).

4. The in-wheel motor unit (20) according to claim 3, wherein the arm body (98) has a plurality of through holes through which the plural screws respectively pass around the arm opening (120).

5. The in-wheel motor unit (20) according to any one of claims 1 to 4, wherein the first face (100) of the arm body (98) has an outside concave part (108) that is concave toward the second face (102), and
the axle (26) is inserted into the outside concave part (108).

6. The in-wheel motor unit (20) according to any one of claims 1 to 5, wherein the motor cable (92) includes a plurality of first electric wires (94), and
the first terminal (126) includes a plurality of first terminals (126) to which the plural first electric wires (94) are respectively connected so as to be detachable.

7. The in-wheel motor unit (20) according to any one of claims 1 to 6, wherein the power cable (124) includes a plurality of second electric wires (130), and
the second terminal (128) includes a plurality of second terminals (128) to which the plural second electric wires (130) are respectively connected so as to be detachable.

8. The in-wheel motor unit (20) according to any one of claims 1 to 7, further comprising:
a first gasket (162) for securing liquid tightness between the arm body (98) and the arm cover (132); and
a second gasket (178) for securing liquid tightness between the main cover (140) and the sub-cover (164).

9. The in-wheel motor unit (20) according to claim 8, wherein the sub-cover (164) has a convex part (168) entering the inside of the cover opening (142).

10. The in-wheel motor unit (20) according to claim 9, wherein the convex part (168) has a shape extending in a belt shape along the cover opening (142).

11. The in-wheel motor unit (20) according to claim 9 or 10, wherein the main cover (140) has an inner peripheral surface of the cover opening (142), and
the second gasket (178) is interposed between the inner peripheral surface and the convex part (168).

12. The in-wheel motor unit (20) according to any one of claims 1 to 11, wherein the main cover (140) has a peripheral edge part surrounding the cover opening (142) on a surface facing the opposite of the second face (102), and
the sub-cover (164) has a flange (170) expanding from the convex part (168) so as to overlap with the peripheral edge part.

13. The in-wheel motor unit (20) according to claim 12, wherein the flange (170) contacts the main cover (140) at a peripheral edge and does not contact the main cover (140) at a portion adjacent to the convex part (168).

14. The in-wheel motor unit (20) according to any one of claims 1 to 13, wherein the second terminals (128) are covered with the main cover (140) so as to avoid facing the sub-cover (164).

15. An electric vehicle comprising:
the in-wheel motor unit (20) according to any one of claims 1 to 14;
a vehicle body frame to which the in-wheel motor (72) unit is attached;
a battery (18) connected to the power cable (124) and fixed to the vehicle body frame;
a seat (16) fixed to the vehicle body frame; and
a handle (14) fixed to the vehicle body frame.

## Patentansprüche

1. Eine In-Rad-Motor-Einheit (20), die umfasst:
einen In-Rad-Motor (72), der eine Achse (26), einen Stator (74), an der Achse (26) fixiert ist, und ein Motor-Gehäuse (38), das durch die Achse (26) gelagert ist, so dass diese drehbar ist, hat;
einen Arm-Körper (98), der eine erste Fläche (100), an der ein End-Teil der Achse (26) fixiert ist, und eine zweiten Fläche (102), die einem Bereich, gegenüber der ersten Fläche (100) zugewandt ist, hat;
Befestigungselemente (110), von denen zumindest ein Teil in der zweiten Fläche (102) freiliegt, die den Arm-Körper (98) und die Achse (26) fixieren, so dass er abnehmbar ist;
eine Arm-Abdeckung (132), die eine Haupt-Abdeckung (140), die eine Abdeckungs-Öffnung (142) an einer Position hat, die den Befestigungselementen (110) zugewandt ist, und eine Unter-Abdeckung (164), die an der Haupt-Abdeckung (140) angebracht ist, um die Abdeckungs-Öffnung (142) zu blockieren, und die an dem Arm-Körper (98) befestigt ist, um die zweite Fläche (102) abzudecken und einen Arm-Innenraum (114) bildet, beinhaltet;
ein Motor-Kabel (92), das ein erstes Ende, das mit dem In-Rad-Motor (72) verbunden ist, und ein zweiten Ende, das in dem Arm-Innenraum (114) positioniert ist, beinhaltet, zumindest ein Teil davon zwischen dem ersten Ende und dem zweiten Ende verläuft durch das Innere der Achse (26);
ein Strom-Kabel (124), das ein drittes Ende, das an der Außen-Seite des Arm-Innenraums (114) positioniert ist, und ein viertes Ende, das an der Innen-Seite des Arm-Innenraums (114) positioniert ist; und
ein Anschluss-Brett (122), das innerhalb des Arm-Innenraums (114) angeordnet ist, beinhaltet einen ersten Anschluss (126), mit dem das Motor-Kabel (92) verbunden ist, so dass es abnehmbar ist, an einer Position, die der Abdeckungs-Öffnung (142) zugewandt ist, und einen zweiten Anschluss (128), mit dem das Strom-Kabel (124) verbunden ist.

2. Die In-Rad-Motor-Einheit (20) gemäß Anspruch 1, wobei der Arm-Körper (98) eine Arm-Öffnung (120) zum Anordnen des Motor-Kabels (92) an der zweiten Fläche (102) hat,
die Achse (26) eine Achs-Öffnung (32) zum Anordnen des Motor-Kabels (92) an der zweiten Fläche (102) an dem End-Teil, an dem die ersten Fläche (100) befestigt ist, hat, und
die Arm-Öffnung (120) und die Achs-Öffnung (32) miteinander kommunizieren.

3. Die In-Rad-Motor-Einheit (20) gemäß Anspruch 2, wobei die Befestigungselemente (110) eine Mehrzahl von Schrauben beinhalten, die um die Arm-Öffnung (120) und die Achs-Öffnung (32) herum angeordnet sind.

4. Die In-Rad-Motor-Einheit (20) gemäß Anspruch 3, wobei der Arm-Körper (98) eine Mehrzahl von Durchgangs-Löchern hat, durch welche die mehreren Schrauben jeweils um die Arm-Öffnung (120) herum, hindurch treten.

5. Die In-Rad-Motor-Einheit (20) gemäß einem der Ansprüche 1 bis 4, wobei die erste Fläche (100) des Arm-Körpers (98) einen äußeren konkaven Teil (108) hat, der zur zweiten Fläche (102) hin konkav ist, und
die Achse (26) in den äußeren konkaven Teil (108) eingesetzt ist.

6. Die In-Rad-Motor-Einheit (20) gemäß einem der Ansprüche 1 bis 5, wobei das Motor-Kabel (92) eine Mehrzahl von ersten elektrischen Drähten (94) aufweist, und
der erste Anschluss (126) eine Mehrzahl von ersten Anschlüssen (126) umfasst, mit denen die mehreren ersten elektrischen Drähte (94) jeweils so verbunden sind, dass sie abnehmbar sind.

7. die In-Rad-Motor-Einheit (20) gemäß einem der Ansprüche 1 bis 6, wobei das Strom-Kabel (124) eine Mehrzahl von zweiten elektrischen Drähten (130) beinhaltet, und der zweite Anschluss (128) eine Mehrzahl von zweiten Anschlüssen (128) beinhaltet, mit denen die mehreren zweiten elektrischen Drähte (130) jeweils verbunden sind, so dass sie abnehmbar sind.

8. Die In-Rad-Motor-Einheit (20) gemäß einem der Ansprüche 1 bis 7, die weiterhin umfasst:
eine erste Dichtung (162) zur Sicherung der Flüssigkeitsdichtigkeit zwischen dem Arm-Körper (98) und der Arm-Abdeckung (132); und
eine zweite Dichtung (178) zur Sicherung der Flüssigkeitsdichtigkeit zwischen der Haupt-Abdeckung (140) und der Unter-Abdeckung (164).

9. Die In-Rad-Motor-Einheit (20) gemäß Anspruch 8, wobei die Unter-Abdeckung (164) einen konvexen Teil (168) hat, der sich in die Innen-Seite der Abdeckungs-Öffnung (142) erstreckt.

10. Die In-Rad-Motor-Einheit (20) gemäß Anspruch 9, wobei der konvexe Teil (168) eine Form hat, die sich in einer Gurtform entlang der Abdeckungs-Öffnung (142) erstreckt.

11. Die In-Rad-Motor-Einheit (20) gemäß Anspruch 9 oder 10, wobei die Haupt-Abdeckung (140) eine innere Umfangsfläche der Abdeckungs-Öffnung (142) hat, und die zweite Dichtung (178) zwischen der inneren Umfangsfläche und dem konvexen Teil (168) angeordnet ist.

12. Die In-Rad-Motor-Einheit (20) gemäß einem der Ansprüche 1 bis 11, wobei die Haupt-Abdeckung (140) einen Umfangs-Kanten-Teil, der die Abdeckungs-Öffnung (142) umgibt, an einer Oberfläche, die der zweiten Fläche (102) zugewandt ist, hat, und
die Unter-Abdeckung (164) einen Flansch (170) hat, der sich von dem konvexen Teil (168) aus erweitert, so dass er mit dem Umfangs-Kanten-Teil überlappt.

13. Die In-Rad-Motor-Einheit (20) gemäß Anspruch 12, wobei der Flansch (170) die Haupt-Abdeckung (140) an einer Umfangs-Kante berührt und die Haupt-Abdeckung (140) an einem Abschnitt, der an das konvexe Teil (168) angrenzt, nicht berührt.

14. Die In-Rad-Motor-Einheit (20) gemäß einem der Ansprüche 1 bis 13, wobei die zweiten Anschlüsse (128) mit der Haupt-Abdeckung (140) abgedeckt sind, so dass sie nicht der Unter-Abdeckung (164) zugewandt sind.

15. Ein Elektro-Fahrzeug, das umfasst:
die In-Rad-Motor-Einheit (20) gemäß einem der Ansprüche 1 bis 14;
einem Fahrzeug-Karosserie-Rahmen, an dem die In-Rad-Motor-Einheit (72) angebracht ist;
eine Batterie (18), die mit dem Strom-Kabel (124) verbunden und am Fahrzeug-Karosserie-Rahmen fixiert ist;
einen Sitz (16), der an dem Fahrzeug-Karosserie-Rahmen fixiert ist; und
einem Griff (14), der Fahrzeug-Karosserie-Rahmen fixiert ist.

## Revendications

1. Unité moteur-roue (20) comprenant :
un moteur intégré à une roue (72) présentant un essieu (26), un stator (74) fixé à l'essieu (26) et un carter de moteur (38) soutenu par l'essieu (26) de sorte à être mobile en rotation ;
un corps de bras (98) présentant une première face (100) à laquelle une partie d'extrémité de l'essieu (26) est fixée et une deuxième face (102) orientée vers une zone opposée à la première face (100) ;
des fixations (110) dans lesquelles au moins une partie de celles-ci est exposée sur la deuxième face (102), fixant le corps de bras (98) et l'essieu (26) de sorte à être amovibles ;
un carter de bras (132) incluant un carter principal (140) présentant une ouverture de carter (142) à un emplacement orienté vers les fixations (110) et un sous-carter (164) rattaché au carter principal (140) de sorte à bloquer l'ouverture de carter (142), qui est fixé au corps de bras (98) de sorte à couvrir la deuxième face (102) et à former un espace interne de bras (114) ;
un câble de moteur (92) incluant une première extrémité connectée au moteur intégré à une roue (72) et une deuxième extrémité positionnée dans l'espace interne de bras (114), au moins une partie duquel entre la première extrémité et la deuxième extrémité passe à l'intérieur de l'essieu (26) ;
un câble d'alimentation (124) incluant une troisième extrémité positionnée à l'extérieur de l'espace interne de bras (114) et une extrémité en avant positionnée à l'intérieur de l'espace interne de bras (114) ; et
une plaque de bornes (122) installée à l'intérieur de l'espace interne de bras (114), incluant une première borne (126) à laquelle le câble de moteur (92) est connecté de sorte à être amovible à un emplacement orienté vers l'ouverture de carter (142) et une deuxième borne (128) à laquelle le câble d'alimentation (124) est connecté.

2. L'unité moteur-roue (20) selon la revendication 1, dans laquelle le corps de bras (98) présente une ouverture de bras (120) pour installer le câble de moteur (92) sur la deuxième face (102), l'essieu (26) présente une ouverture d'essieu (32) pour installer le câble de moteur (92) sur la deuxième face (102) sur la partie d'extrémité fixée à la première face (100), et
l'ouverture de bras (120) et l'ouverture d'essieu (32) communiquent l'une avec l'autre.

3. L'unité moteur-roue (20) selon la revendication 2, dans laquelle les fixations (110) incluent une pluralité de vis disposées autour de l'ouverture de bras (120) et l'ouverture d'essieu (32).

4. L'unité moteur-roue (20) selon la revendication 3, dans laquelle le corps de bras (98) inclut une pluralité de trous traversants que les plusieurs vis respectivement traversent autour de l'ouverture de bras (120) .

5. L'unité moteur-roue (20) selon l'une quelconque des revendications 1 à 4, dans laquelle la première face (100) du corps de bras (98) présente une partie concave externe (108) qui est concave vers la deuxième face (102), et
l'essieu (26) est inséré dans la partie concave extérieure (108).

6. L'unité moteur-roue (20) selon l'une quelconque des revendications 1 à 5, dans laquelle le câble de moteur (92) inclut une pluralité de premiers fils électriques (94), et
la première borne (126) inclut une pluralité de premières bornes (126) auxquelles les plusieurs premiers fils électriques (94) sont respectivement connectés de sorte à être amovibles.

7. L'unité moteur-roue (20) selon l'une quelconque des revendications 1 à 6, dans laquelle le câble d'alimentation (124) inclut une pluralité de deuxièmes fils électriques (130), et
la deuxième borne (128) inclut une pluralité de deuxièmes bornes (128) auxquelles les plusieurs deuxièmes fils électriques (130) sont respectivement connectés de sorte à être amovibles.

8. L'unité moteur-roue (20) selon l'une quelconque des revendications 1 à 7, comprenant en outre :
un premier joint (162) pour sécuriser une étanchéité aux liquides entre le corps de bras (98) et le carter de bras (132) ; et
un deuxième joint (178) pour sécuriser une étanchéité aux liquides entre le carter principal (140) et le sous-carter (164).

9. L'unité moteur-roue (20) selon la revendication 8, dans laquelle le sous-carter (164) présente une partie convexe (168) entrant à l'intérieur de l'ouverture de carter (142).

10. L'unité moteur-roue (20) selon la revendication 9, dans laquelle la partie convexe (168) présente une forme se prolongeant en une forme de courroie le long du carter (142).

11. L'unité moteur-roue (20) selon la revendication 9 ou 10, dans laquelle le carter principal (140) présente une surface périphérique intérieure de l'ouverture de carter (142), et
le deuxième joint (178) est interposé entre la surface périphérique intérieure et la partie convexe (168).

12. L'unité moteur-roue (20) selon l'une quelconque des revendications 1 à 11, dans laquelle le carter principal (140) présente une partie d'arête périphérique entourant l'ouverture de carter (142) sur une surface orientée vers l'opposé de la deuxième face (102), et
le sous-carter (164) présente une bride (170) s'étendant de la partie convexe (168) de sorte à chevaucher la partie d'arête périphérique.

13. L'unité moteur-roue (20) selon la revendication 12, dans laquelle la bride (170) entre en contact avec le carter principal (140) au niveau d'une arête périphérique et n'entre pas en contact avec le carter principal (140) au niveau d'une partie adjacente à la partie convexe (168).

14. L'unité moteur-roue (20) selon l'une quelconque des revendications 1 à 13, dans laquelle les deuxièmes bornes (128) sont couvertes par le carter principal (140) de sorte à éviter une orientation vers le sous-carter (164).

15. Véhicule électrique comprenant :
l'unité moteur-roue (20) selon l'une quelconque des revendications 1 à 14 ;
un cadre de véhicule auquel l'unité de moteur intégré à une roue (72) est rattachée ;
une batterie (18) connectée au câble d'alimentation (124) et fixée au cadre de véhicule ;
une selle (16) fixée au cadre de véhicule ; et
un guidon (14) fixé au cadre de véhicule.
